Europäisches Patentamt

**European Patent Office**

**Office européen des brevets**

(19)

(11) Numéro de publication: **0 112 733**
**A1**

(12) # DEMANDE DE BREVET EUROPEEN

(21) Numéro de dépôt: 83402113.1

(22) Date de dépôt: 28.10.83

(51) Int. Cl.³: **B 62 D 33/06**

(30) Priorité: 29.10.82 FR 8218185

(43) Date de publication de la demande: 04.07.84
Bulletin 84/27

(84) Etats contractants désignés: **AT BE CH DE GB IT LI LU NL SE**

(71) Demandeur: **IRTEX Société à Responsabilité Limitée dite :, 23, rue Laugier, F-75017 Paris (FR)**

(72) Inventeur: **Harvey, René Jacques, 16, rue H. Dussaut, F-78500 Sartrouville (FR)**

(74) Mandataire: **Bruder, Michel, 10 rue de la Pépinière, F-75008 Paris (FR)**

(54) **Cabine de véhicule poids lourd.**

(57) Une cabine de véhicule poids lourd, montée à l'avant du châssis du véhicule, comprend une embase (4) fixée au châssis (2) du véhicule et une coque (9) associée à un support (8) monté à coulissement longitudinal sur cette embase (4).

Pour faciliter l'accès à l'intérieur de la cabine, celle-ci possède un écartement entre des bords postérieurs (12c) d'un arceau (12) de la coque (9) mobile et des bords antérieurs (7a) d'une superstructure (7) fixe de l'embase (4) permettant le passage du conducteur lorsque la coque (9) est déplacée vers l'avant, cet écartement étant fermé et les bords postérieurs (12c) appliqués étroitement sur les bords antérieurs (7a) lorsque la coque (9) est déplacée complètement vers l'arrière.

EP 0 112 733 A1

La présente invention concerne une cabine de véhicule poids lourd.

Certains des véhicules poids lourd utilisés à ce jour comportent, à l'avant, une cabine avancée pourvue de portes latérales et qui peut basculer, à sa partie inférieure et antérieure, autour d'un axe transversal, de manière à permettre de dégager complètement le moteur qui est logé normalement à l'intérieur de la cabine. Si ces cabines sont couramment utilisées et donnent généralement satisfaction lors de transport dans des conditions satisfaisantes, par exemple sur routes et autoroutes, il n'en n'est pas de même lorsque les véhicules poids lourd sont employés dans des conditions difficiles, sur des terrains irréguliers, par exemple dans le désert sur ce que l'on appelle la "tôle ondulée". En effet, on constate qu'au bout d'une certaine période de temps d'utilisation du véhicule poids lourd, les éléments constitutifs de la cabine présentent des signes de défaillance dus aux vibrations importantes auxquelles ils sont soumis pendant l'utilisation du véhicule.

La présente invention vise à remédier à ces inconvénients en procurant une cabine de conception particulièrement simple, résistant bien aux vibrations et d'un accès particulièrement commode.

A cet effet, cette cabine de véhicule poids lourd, montée à l'avant du châssis du véhicule, comprenant une embase fixée au châssis du véhicule et une coque associée à un support monté à coulissement longitudinal sur cette embase, caractérisée en ce qu'elle possède un écartement entre des bords postérieurs d'un arceau de la coque mobile et des bords antérieurs d'une superstructure fixe de l'embase permettant le passage du conducteur lorsque la coque est déplacée vers l'avant, cet écartement étant fermé et les bords postérieurs appliqués étroitement sur les bords antérieurs lorsque la coque est déplacée complètement vers l'arrière.

Suivant une caractéristique complémentaire de l'invention l'embase inférieure de la cabine est reliée au châssis par des moyens de suspension élastique assurant un amortissement des vibrations.

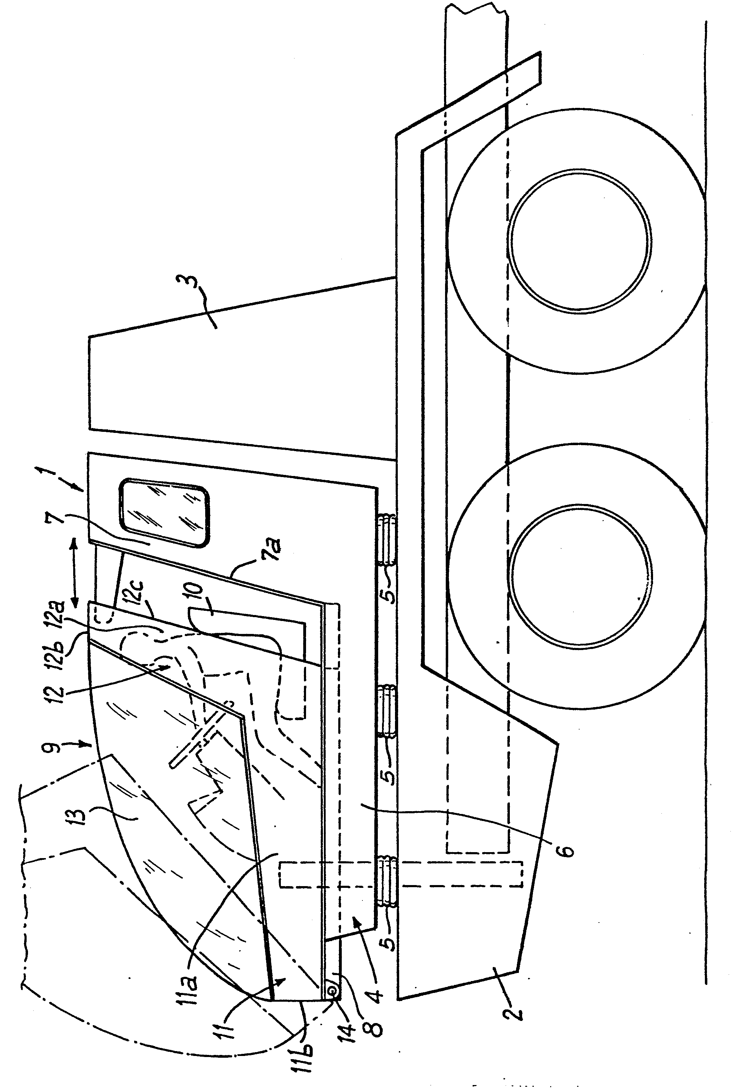

On décrira ci-après, à titre d'exemple non limitatif, une forme d'exécution de la présente invention, en référence au dessin annexé qui est une vue en élévation schématique d'une cabine suivant l'invention.

La cabine 1 du véhicule poids lourd représentée sur le dessin est montée à l'avant du châssis 2 du véhicule et en arrière de cette cabine est prévu de la manière habituelle, sur le châssis 2, un coffre 3 contenant divers appareils et accessoires portés habituellement par le camion. La cabine 1 suivant l'invention comporte une embase 4 qui est fixée au châssis 1 par des organes de suspension élastiques 5, tels que ressorts, soufflets, etc, amortissant les vibrations. L'embase 4 comporte une partie inférieure horizontale 6 constituée elle-même de deux panneaux latéraux et longitudinaux et d'un panneau frontal transversal, laquelle est prolongée vers le haut par une superstructure 7 constituée de panneaux latéraux et d'une traverse supérieure horizontale. Cette superstructure 7 peut être avantageusement inclinée légèrement vers l'arrière, comme il est représenté sur le dessin.

Sur l'embase 4 est monté à coulissement longitudinal un support 8 qui peut être réalisé de toute manière appropriée. Ce support 8 qui est disposé sous le plancher de la cabine fixé à l'embase 4, peut être constitué par un cadre formé de longerons et de traverses, les longerons latéraux coulissant eux-mêmes dans des guides de forme appropriée fixés aux panneaux latéraux de la partie inférieure 6 de l'embase 4. Le mouvement de coulissement du support 8 peut être commandé par un ou plusieurs vérins.

Sur le support coulissant 8 est montée une coque 9 destinée à protéger le conducteur du véhicule qui est représenté schématiquement assis sur un siège 10 fixé sur le plancher solidaire de l'embase 4. La coque 9 comporte une armature constituée d'un bandeau inférieur 11 et d'un arceau postérieur 12. Le bandeau inférieur 11 comprend lui-même deux parties latérales 11a reliées entre elles par une partie frontale et transversale 11b, ces trois parties formant avantageusement une seule pièce pouvant être quelque peu galbée. L'arceau postérieur et supérieur 12 qui est solidaire du bandeau inférieur 11, comprend également deux panneaux latéraux et sensiblement verticaux 12a, qui s'étendent vers le haut à partir des extrémités postérieures des parties latérales 11a du bandeau inférieur 11. Les extrémités supérieures des panneaux latéraux 12a de l'arceau 12 sont à leur tour reliées par une traverse supérieure 12b. Là encore les panneaux 12a et la traverse 12b forment avantageusement une seule pièce qui peut être éventuellement galbée. Les panneaux latéraux 12a de l'arceau 12 sont terminés par des bords postérieurs 12c inclinés par rapport à l'horizontale et qui présentent la même pente que les bords antérieurs 7a de la superstructure 7, de manière à pouvoir appliquer étroitement sur ceux-ci lorsque la cabine est fermée.

Le bandeau inférieur 11 et l'arceau postérieur 12 de la coque 9 délimitent vers l'avant et vers le haut une ouverture qui est obturée par une plaque transparente 13 avantageusement galbée pour des raisons d'esthétique et d'aérodynamisme. La plaque transparente 13 est fixée par ses bords au bord supérieur du bandeau inférieur 11 et au bord antérieur de l'arceau 12, en formant avec ceux-ci une seule pièce.

La coque 9 et plus particulièrement le bandeau inférieur 11 sont articulés, à leur extrémité antérieure, sur le support coulissant 8, autour d'un axe transversal 14.

On voit donc, d'après la description qui précéde, que pour pouvoir pénétrer dans la cabine 1, il suffit de faire coulisser vers l'avant le support 8 et la coque 9 qu'il porte, comme il est indiqué dans la position indiquée en trait plein sur le dessin. Du fait de ce coulissement les bords postérieurs 12c de l'arceau 12 de la cabine 9 se trouvent être écartés suffisamment des bords antérieurs 7a de la superstructure fixe 7 pour permettre le passage entre eux du conducteur qui peut alors s'installer sur le siège 10 ou quitter la cabine.

Par ailleurs, lorsque l'ensemble de la coque 9 se trouve dans la position ainsi avancée, c'est-à-dire le support 8 occupant sa position extrême antérieure, il est possible de faire basculer vers le haut et vers l'avant l'ensemble de la coque 9, autour de l'axe transversal 14, pour l'amener dans une position d'ouverture totale telle qu'indiquée en trait mixte sur le dessin. Dans cette position le moteur du poids lourd qui se trouve normalement à l'intérieur de la cabine 3, est totalement dégagé et accessible.

Le mouvement de basculement de l'ensemble de la coque 9 peut être commandé par tous moyens appropriés tels que, par exemple, un vérin articulé d'une part sur la coque 9 et d'autre part sur le support coulissant 8

REVENDICATIONS

1- Cabine de véhicule poids lourd, montée à l'avant du châssis du véhicule, comprenant une embase (4) fixée au châssis (2) du véhicule et une coque (9) associée à un support (8) monté à coulissement longitudinal sur cette embase (4), caractérisée en ce qu'elle possède un écartement entre des bords postérieurs (12c) d'un arceau (12) de la coque (9) mobile et des bords antérieurs (7a) d'une superstructure (7) fixe de l'embase (4) permettant le passage du conducteur lorsque la coque (9) est déplacée vers l'avant, cet écartement étant fermé et les bords postérieurs (12c) appliqués étroitement sur les bords antérieurs (7a) lorsque la coque (9) est déplacée complètement vers l'arrière.

2- Cabine de véhicule poids lourd suivant la revendication 1 pourvue de moyens de suspension élastiques (5) assurant un amortissement des vibrations, caractérisée en en ce que lesdits moyens élastiques (5) sont placés entre l'embase (4) et le châssis (2).

3.- Cabine de véhicule poids lourd suivant l'une quelconque des revendications 1 à 2, montée à pivotement par rapport au châssis par sa partie extrême antérieure et inférieure autour d'un axe transversal, caractérisée en ce que l'axe transversal (14) est placé entre la coque (9) et le support coulissant (8).

4.- Cabine de véhicule poids lourd suivant l'une quelconque des revendications précédentes caractérisée en ce que l'embase (4) comporte une partie inférieure horizontale (6) constituée de deux panneaux latéraux et longitudinaux et d'un panneau frontal transversal, laquelle est prolongée vers le haut par une superstructure (7) constituée de panneaux latéraux et d'une traverse supérieure horizontale.

5.- Cabine de véhicule poids lourd suivant la revendication 4 caractérisée en ce que la superstructure (7) de l'embase (4) est légèrement inclinée vers l'arrière.

6.- Cabine de véhicule poids lourd suivant l'une quelconque des revendications précédentes caractérisée en ce que la coque (9) comporte une armature constituée d'un bandeau inférieur et d'un arceau postérieur (12), le bandeau inférieur (11) comprenant deux parties latérales (11a) reliées entre elles par une partie frontale et transversale (11b) tandis que l'arceau postérieur et supérieur (12) qui est solidaire du bandeau inférieur (11), comprend deux panneaux latéraux sensiblement verticaux (12a) reliés, à leurs extrémités inférieures, aux extrémités postérieures des parties latérales (11a) du bandeau inférieur (11) et, à leurs extrémités supérieures, à une traverse supérieure (12b).

7.- Cabine de véhicule poids lourd suivant la revendication 6 caractérisée en ce que les bords postérieurs (12c) de l'arceau (12) de la coque (9) sont inclinés par rapport à l'horizontale et présentent la même pente que les bords antérieurs (7a) de la superstructure (7) de l'embase (4).

0112733

**Office européen des brevets**

## RAPPORT DE RECHERCHE EUROPEENNE

Numéro de la demande

EP 83 40 2113

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. 3) |
|---|---|---|---|
| Y | FR-A-2 147 012 (ANGELUCCI et al.) <br> * En entier * | 1 | B 62 D 33/06 |
| Y | DE-A-1 405 194 (DAIMLER-BENZ) <br> * En entier * | 1,2 | |
| A | GB-A- 818 909 (DAIMLER-BENZ) | 1 | |
| A | US-A-3 061 376 (BELA BARENYI) | 1 | |
| A | US-A-2 656 214 (ALAMAGNY) | 1 | |
| A | US-A-2 838 126 (GLEASMAN) | 1 | |
| A | US-A-4 121 684 (STEPHENS et al.) | 1 | |
| A | US-A-3 393 005 (HERRMANN) | 1 | |

DOMAINES TECHNIQUES RECHERCHES (Int. Cl. 3)

B 62 D

Le présent rapport de recherche a été établi pour toutes les revendications

| Lieu de la recherche | Date d'achèvement de la recherche | Examinateur |
|---|---|---|
| LA HAYE | 09-02-1984 | SCHMAL R. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

 

& : membre de la même famille, document correspondant

OEB Form 1503. 03.82